# EUROPÄISCHE PATENTSCHRIFT

(11) **EP 4 476 020 B1**
(45) Veröffentlichungstag und Bekanntmachung des Hinweises auf die Patenterteilung: **31.12.2025**
(21) Anmeldenummer: 23704108.2
(22) Anmeldetag: 07.02.2023
(51) Int. Cl.: B23K 26/03, B23K 26/0622, B23K 26/364, B60R 21/2165

(54) **VERFAHREN ZUM EINBRINGEN EINER PERFORATIONSLINIE IN EINE AIRBAG-ABDECKUNG**
METHOD FOR MAKING A PERFORATION LINE IN AN AIRBAG COVER
PROCÉDÉ POUR INTRODUIRE UNE LIGNE DE PERFORATION DANS UN CAPOT DE COUSSIN DE SÉCURITÉ GONFLABLE

(30) Priorität: 09.02.2022 DE 102022103016
(43) Veröffentlichungstag der Anmeldung: 18.12.2024
(73) Patentinhaber: JENOPTIK Automatisierungstechnik GmbH, 07745 Jena (DE)
(72) Erfinder: KERN, André, 07743 Jena (DE)
(74) Vertreter: Gleim Petri Patent- und Rechtsanwaltspartnerschaft mbB
(86) Internationale Anmeldenummer: PCT/EP2023/052958
(87) Internationale Veröffentlichungsnummer: WO 2023/152117

(56) Entgegenhaltungen:
- CN-A- 108 788 488
- DE-A1- 10 355 931
- DE-A1- 102019 132 619
- JP-A- 2007 139 606

## Beschreibung

Die Erfindung betrifft ein Verfahren zum Einbringen einer Perforationslinie in eine Airbag-Abdeckung, bei dem eine Restwandstärke der Airbag-Abdeckung ermittelt und eine Bearbeitungsstrahlquelle in Abhängigkeit von der Restwandstärke gesteuert wird.

Ein Verfahren zur Bearbeitung eines Werkstücks, das insbesondere ein plattenartiges Material zur Freisetzung eines Airbags (Airbag-Abdeckung) sein kann, ist aus der DE 10 2018 002 300 A1 bekannt. Zur Bereichsschwächung wird ein Schwächungslaserstrahl von einem Schwächungslaser emittiert, der strahlüberdeckend, strahlparallel oder korrespondierend zu einem Messlaserstrahl geführt wird, wobei der Messlaserstrahl eine Wellenlänge aufweist, die sich von der Wellenlänge des Schwächungslaserstrahls unterscheidet. Ein zu schwächender Bereich weist für die Wellenlänge des Messlaserstrahls eine höhere Transmission als für die Wellenlänge des Schwächungslaserstrahls auf. Die geschwächten Bereiche können zahnartig nebeneinander in einer Reihe angeordnet sein. Die aktuelle Leistung des Messlaserstrahls wird durch einen Detektionssensor gemessen und aus der aktuellen Leistung wird mittelbar, unter Verwendung eines vorgegebenen Messlaser-Schwächungslaser-Relativweg-Verhältnisses, eine Restwandstärke ermittelt. Basierend auf der ermittelten Restwandstärke erfolgt eine Einstellung der Laserleistung und/oder der Laserdauer des Schwächungslasers. Bei dem offenbarten Verfahren ist zum Ermitteln der Restwandstärke und folglich zum Einstellen der Parameter des Schwächungslasers stets eine Transmission von Laserstrahlung durch das Werkstück erforderlich. Das hat zur Folge, dass nur sehr geringe Restwandstärken ermittelt werden können und das Verfahren nur für bestimmte Werkstückmaterialien mit entsprechenden optischen Eigenschaften geeignet ist.

Ein weiteres Verfahren zur Lasermaterialbearbeitung eines Werkstücks ist durch die WO 2014/138939 A1offenbart. Das Verfahren umfasst das Emittieren eines Materialverarbeitungsstrahls und eines oder mehrerer bildgebender Strahlen. Ein Phasenänderungsbereich eines Werkstücks wird mit dem Materialverarbeitungsstrahl und dem mindestens einen bildgebender Strahl beaufschlagt. Die bildgebenden Strahlen werden verwendet, um Messungen mit Hilfe der Niederkohärenzinterferometrie an mindestens einem Punkt des Phasenänderungsbereichs durchzuführen. Dazu werden die vom Werkstück reflektierten Anteile der bildgebenden Strahlen mit anderen Anteilen, beispielsweise aus einem Referenzarm, kombiniert, um eine Interferometrieausgabe auf Basis einer Weglängendifferenz zu erzeugen. Im Anschluss wird die Interferometrieausgabe verarbeitet, um mindestens eine Charakteristik, wie beispielsweise die Tiefe eines Sacklochs, des Phasenänderungsbereichs zu bestimmen. Auf der Grundlage der mindestens einen bestimmten Charakteristik des Phasenänderungsbereichs, kann mindestens ein Parameter des Bearbeitungsprozesses gesteuert werden.

Die DE 10 2018 129 407 A1 offenbart ein Verfahren zum Schneiden eines Werkstücks mittels eines Laserstrahls. Dabei wird ein Schnittspalt auf dem Werkstück mit dem Laserstrahl, der von einer Laservorrichtung emittiert wird, erzeugt. Der Schnittspalt wird gleichzeitig mit einem Messstrahl, der von einer Lichtquelle eines Kohärenztomographen emittiert wird, beaufschlagt. Der Kohärenztomograph verfügt über einen Referenzarm, aus dem ausgekoppeltes Licht mit dem reflektierten Messstrahl zur Interferenz gebracht wird. Der Messstrahl wird ausgelenkt, um den Schnittspalt zu vermessen, und eine Interferenzantwort wird detektiert, um wenigstens eine geometrische Eigenschaft des Schnittspalts zu ermitteln. Auf Grundlage der wenigstens einen detektierten Eigenschaft des Schnittspalts kann ein Prozessparameter des Schneidvorgangs, insbesondere die Parameter der Laservorrichtung, gesteuert werden.

Nachteilig an den beiden vorgenannten Verfahren ist, dass der Referenzarm jeweils von dem Werkstück unabhängig ist. So werden Unebenheiten einer Auflagefläche, auf der das Werkstück aufliegt, Unebenheiten einer Oberfläche des Werkstücks oder eine Dickenschwankung der des Werkstückes nicht berücksichtigt und führen zu einer fehlerhaften Ermittlung der verbleibenden Restwandstärke.

Aus der WO 01/70445 A1 ist eine Vorrichtung zum Einbringen einer Sollbruchlinie in eine Airbag-Abdeckung bekannt, die zwei Sensoren umfasst, die von gegenüberliegenden Seiten her auf den Bearbeitungsort gerichtet sind. Die verbleibende Restwandstärke wird aus einer Kombination der Signale der beiden Sensoren abgeleitet.

Die EP 1 977 850 B1 offenbart eine Bearbeitungsvorrichtung für die Bearbeitung von Werkstücken mit einem hochenergetischen Bearbeitungsstrahl. Dem Bearbeitungskopf ist wenigstens eine als optischer Kohärenztomograph ausgebildete Abtasteinrichtung zugeordnet, mit der die Werkstückoberfläche ein-, zwei- oder dreidimensional abgetastet werden kann. Die Abtastung erfolgt mit Hilfe eines Messstrahls, der vom Kohärenztomographen ausgesendet und an der Werkstückoberfläche reflektiert wird. Der reflektierte Messstrahl wird wenigstens teilweise zusammen mit einem Referenzlichtstrahl auf einen Detektor geleitet.

In der DE 103 55 931 A1 (offenbarend den Oberbegriff des Anspruchs 1) ist ein Verfahren zum Laserbohren und eine Vorrichtung zur Durchführung eines Verfahrens zum Laserbohren in ein plattenförmiges Bauteil beschrieben. Vor dem Bohrvorgang wird mit wenigstens einem Messmittel im Bohrbereich eine Bauteilstärke des Bauteils ermittelt, die durch den Abstand der beiden Bauteiloberflächen definiert ist. Mit einem zweiten Messmittel wird während des Bohrvorganges die Bohrtiefe des Bohrloches erfasst.

Es ist die Aufgabe der Erfindung, ein Verfahren zum Einbringen einer Perforationslinie in eine Airbag-Abdeckung zu finden, bei dem eine verbleibende Restwandstärke unabhängig von Unebenheiten oder Dickenschwankungen fehlerfrei ermittelt werden kann und mit dem eine fehlerfreie Ermittlung der verbleibenden Restwandstärke für ein, im Bereich einer Messstrahlung intransparentes, Werkstück möglich ist.

Diese Aufgabe wird erfindungsgemäß für ein Verfahren zum Einbringen einer Perforationslinie in eine Airbag-Abdeckung, bei dem die Airbag-Abdeckung relativ zu einem Werkzeug mit einer Bearbeitungsstrahlquelle und einer ersten Messstrahlquelle entlang einer gedachten Linie geführt wird, eine Bearbeitungsstrahlung mit der Bearbeitungsstrahlquelle emittiert wird, eine erste Messstrahlung mit der ersten Messstrahlquelle emittiert wird und eine zweite Messstrahlung mit einer zweiten Messstrahlquelle emittiert wird, ein sich auf einer der Bearbeitungsstrahlquelle zugewandten Seite der Airbag-Abdeckung befindender Bearbeitungsort mit der Bearbeitungsstrahlung und der ersten Messstrahlung entlang einer Beleuchtungsachse beaufschlagt wird, wobei durch das Beaufschlagen mit der Bearbeitungsstrahlung ein Materialabtrag am Bearbeitungsort erfolgt, ein Messort mit einer zweiten Messstrahlung beaufschlagt wird, eine erste Weglänge der ersten Messstrahlung und eine zweite Weglänge der zweiten Messstrahlung ermittelt werden, die erste Weglänge und die zweite Weglänge ausgewertet werden, wobei die erste Weglänge und die zweite Weglänge zur Ermittlung einer verbleibenden Restwandstärke verwendet werden und die Bearbeitungsstrahlquelle in Abhängigkeit von der ermittelten verbleibenden Restwandstärke gesteuert wird, dadurch gelöst, dass als Messort ein Ort auf einer von der Bearbeitungsstrahlquelle abgewandten Seite der Airbag-Abdeckung, der sich auf der Beleuchtungsachse befindet, mit der zweiten Messstrahlung beaufschlagt wird. Vor dem Bereitstellen der Airbag-Abdeckung wird der Abstand zwischen der ersten Messstrahlquelle und der zweiten Messstrahlquelle ermittelt. Die verbleibende Restwandstärke wird dann aus der Differenz des Abstands zwischen der ersten Messstrahlquelle und der zweiten Messstrahlquelle und der Summe der ersten Weglänge und der zweiten Weglänge ermittelt. Der Abstand zwischen der ersten Messstrahlquelle und der zweiten Messstrahlquelle wird durch ein reflektierendes Element mit einer definierten Dicke ermittelt, wobei das reflektierende Element am Bearbeitungsort bereitgestellt wird.

Vorteilhaft sind die erste Messstrahlquelle und/oder die zweite Messstrahlquelle jeweils die Messstrahlquelle eines Kohärenztomographen und die erste Weglänge und/oder die zweite Weglänge wird mittels optischer Kohärenztomographie ermittelt. Zur Durchführung der optischen Kohärenztomographie kann die erste Messstrahlung und/oder die zweite Messstrahlung vor dem Beaufschlagen durch einen im jeweiligen Strahlengang vorhandenen Strahlteiler in einen Referenzarm teilreflektiert oder teiltransmittiert werden. Der Teil der jeweiligen Messstrahlung, der den Referenzarm durchläuft, wird anschließend mit dem von der Airbag-Abdeckung reflektierten Teil der jeweiligen Messstrahlung überlagert bzw. zur Interferenz gebracht und eine Interferenzantwort von einem Detektor detektiert. Aus der Interferenzantwort kann die erste Weglänge und/oder die zweite Weglänge ermittelt werden.

Die Airbag-Abdeckung kann während des gesamten Verfahrens auf einer Auflagefläche aufliegen. Die Auflagefläche kann transparent oder teilweise transparent für die zweite Messstrahlung sein, damit die zweite Messstrahlung vor dem Beaufschlagen des Messorts durch die Auflagefläche transmittiert werden kann. Alternativ kann die Auflagefläche Aussparungen aufweisen, damit die zweite Messstrahlung vor dem Beaufschlagen des Messorts durch eine Aussparung der Auflagefläche transmittiert werden kann.

Die erste Messstrahlung kann vor und nach der Beaufschlagung des Messorts günstig zumindest abschnittsweise strahlparallel oder strahlüberdeckend mit der Bearbeitungsstrahlung geführt werden.

Es ist von Vorteil, wenn die Bearbeitungsstrahlung eine erste Wellenlänge und die erste Messstrahlung eine zweite Wellenlänge aufweisen. Die erste Wellenlänge kann sich von der zweiten Wellenlänge unterscheiden. Alternativ kann die erste Messstrahlung eine Weißlichtstrahlung sein.

Besonders geeignet ist die erste Messstrahlung als Laserstrahl eines Faserlasers ausgeführt.

Vorteilhaft ist die Bearbeitungsstrahlung der Laserstrahl eines CO₂-Lasers. Ebenso vorteilhaft ist die Bearbeitungsstrahlquelle ein anderer gepulster Laser, dessen Pulsenergie, Pulslänge, Wiederholfrequenz und/oder Emissionsspektrum abhängig von der ermittelten Restwandstärke gesteuert werden.

Die Erfindung soll nachfolgend durch Ausführungsbeispiele anhand von Zeichnungen näher beschrieben werden. Hierzu zeigen:
- Fig. 1: Eine Seitenansicht einer Anordnung zur Durchführung des Verfahrens, umfassend ein Werkzeug, eine Airbag-Abdeckung, eine Auflagefläche und eine zweite Messstrahlquelle,
- Fig. 2: eine Seitenansicht der Strahlengänge von Bearbeitungsstrahlung, erster Messstrahlung und zweiter Messstrahlung zur Ermittlung einer Restwandstärke der Airbag-Abdeckung,
- Fig. 3: eine Seitenansicht der Strahlengänge von erster Messstrahlung und zweiter Messstrahlung mit einem reflektierenden Element am Bearbeitungsort, zur Ermittlung des Abstands der ersten Messstrahlquelle und der zweiten Messstrahlquelle,
- Fig. 4: eine Seitenansicht der Strahlengänge von Bearbeitungsstrahlung, erster Messstrahlung und zweiter Messstrahlung bei einer vorteilhaften Ausführung des Verfahrens und
- Fig. 5: eine Seitenansicht der Strahlengänge von Bearbeitungsstrahlung, erster Messstrahlung und zweiter Messstrahlung bei einer weiteren vorteilhaften Ausführung des Verfahrens.

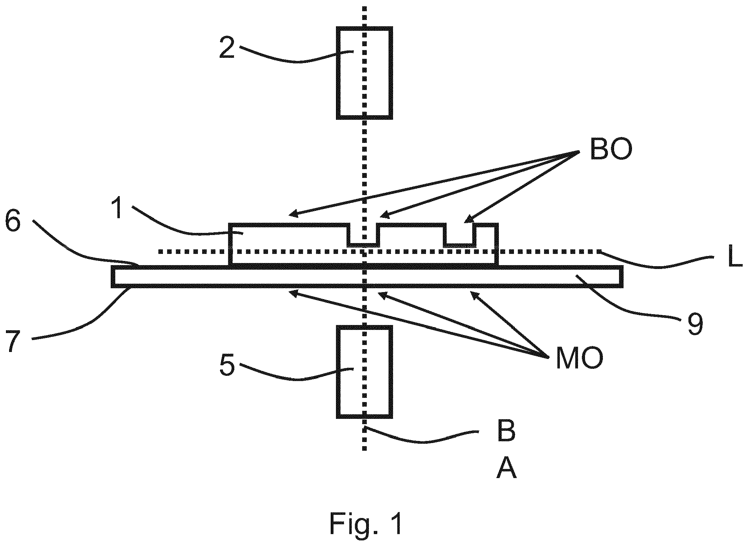

Eine Anordnung zur Durchführung eines Verfahrens zum Einbringen einer Perforationslinie in eine Airbag-Abdeckung 1 ist in Fig. 1 schematisch dargestellt. Während des Verfahrens wird die Airbag-Abdeckung 1 entlang einer gedachten Linie L relativ zu einem Werkzeug 2 geführt, wodurch an mehreren Bearbeitungsorten BO Sacklöcher eingebracht werden können, die eine Perforationslinie in der Airbag-Abdeckung 1 ausbilden. Die Airbag-Abdeckung 1 liegt während des gesamten Bearbeitungsverfahrens entweder auf einer Auflagefläche 9 auf oder wird von einem Roboterarm (nicht dargestellt) gehalten.

Das Werkzeug 2 umfasst eine Bearbeitungsstrahlquelle 3 und eine erste Messstrahlquelle 4. Die Bearbeitungsstrahlquelle 3 ist entlang einer Beleuchtungsachse BA ausgerichtet, die im Wesentlichen senkrecht zu einer der Bearbeitungsstrahlquelle 3 zugewandten Seite 6 der Airbag-Abdeckung 1 ist. Auf einer von der Bearbeitungsstrahlquelle 3 abgewandten Seite 7 der Airbag-Abdeckung 1 ist während des gesamten Verfahrens eine zweite Messstrahlquelle 5 angeordnet.

Zunächst wird die Airbag-Abdeckung 1 bereitgestellt, in die eine Perforationslinie eingebracht werden soll. Zum Erzeugen der Sacklöcher bzw. der Perforationslinie in der Airbag-Abdeckung 1 emittiert die Bearbeitungsstrahlquelle 3 eine Bearbeitungsstrahlung 3.1, mit der ein sich auf der der Bearbeitungsstrahlquelle 3 zugewandten Seite 6 der Airbag-Abdeckung 1 befindlicher Bearbeitungsort BO beaufschlagt wird. Durch die Beaufschlagung mit der Bearbeitungsstrahlung 3.1 erfolgt ein Energieeintrag am Bearbeitungsort BO, der einen Materialabtrag zur Folge hat. An dem Bearbeitungsort BO weist die Airbag-Abdeckung 1 nach der Beaufschlagung mit der Bearbeitungsstrahlung 3.1 eine Restwandstärke RWS auf, die gleich der Dicke der Airbag-Abdeckung 1 am Bearbeitungsort BO abzüglich der Tiefe des Sacklochs ist. Zeitgleich mit der Bearbeitung der Airbag-Abdeckung 1 wird die Restwandstärke RWS ermittelt.

Zum Ermitteln der Restwandstärke RWS emittiert die erste Messstrahlquelle 4 eine erste Messstrahlung 4.1, mit der der Bearbeitungsort BO beaufschlagt wird. Die vom Bearbeitungsort BO diffus reflektierte erste Messstrahlung 4.1 wird durch einen nicht dargestellten Detektor erfasst. Durch die Beaufschlagung mit der ersten Messstrahlung 4.1 wird so eine erste Weglänge a ermittelt, die dem Abstand von der ersten Messstrahlquelle 4 zum Bearbeitungsort BO entspricht. Die zweite Messstrahlquelle 5 emittiert eine zweite Messstrahlung 5.1, mit der ein Messort MO, der sich auf einer von der Bearbeitungsstrahlquelle 3 abgewandten Seite 7 der Airbag-Abdeckung 1 auf der Beleuchtungsachse BA befindet, beaufschlagt wird. Die vom Messort MO reflektierte zweite Messstrahlung 5.1 wird durch einen weiteren, ebenfalls nicht dargestellten Detektor erfasst. Durch die Beaufschlagung mit der zweiten Messstrahlung 5.1 wird so eine zweite Weglänge b ermittelt, die dem Abstand von der ersten Messstrahlquelle 5 zum Messort MO entspricht. Die Abstände sind nicht als räumliche Abstände, sondern viel mehr als optische Abstände bzw. Weglängen entlang der Strahlengänge zu verstehen. Unter Einbezug der ersten Weglänge a und der zweiten Weglänge b soll im Anschluss die verbleibende Restwandstärke RWS ermittelt werden. In Abhängigkeit von der verbleibenden Restwandstärke RWS wird die Bearbeitungsstrahlquelle 3 gesteuert. Um mit der ersten Weglänge a und der zweiten Weglänge b eine Restwandstärke RWS zu ermitteln, ist es von Vorteil, die Positionen der ersten Messstrahlquelle 4 und der zweiten Messstrahlquelle 5 zur Airbag-Abdeckung 1 und damit deren Relativlage zueinander oder zumindest deren Abstand zueinander zu kennen.

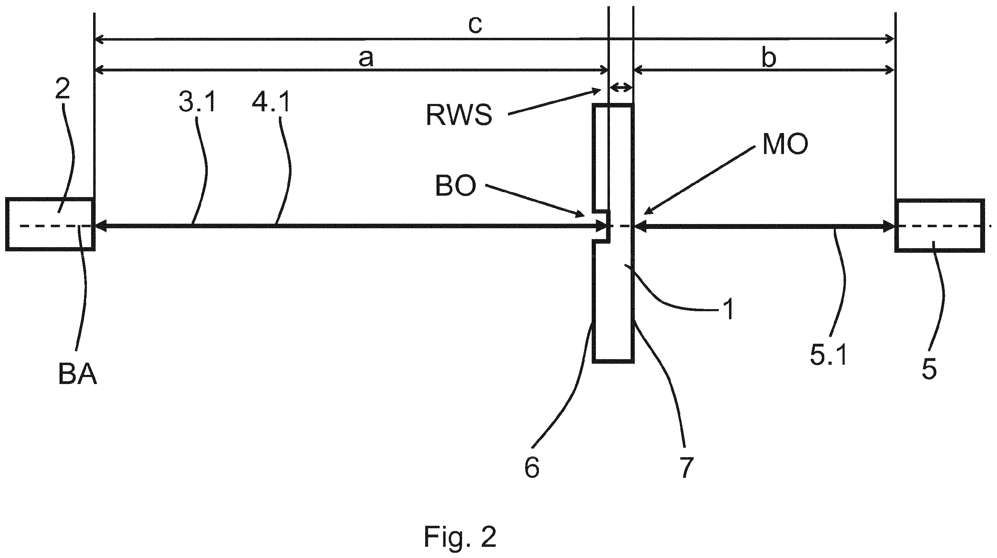

In **Fig. 2** sind die Strahlengänge der Bearbeitungsstrahlung 3.1, der ersten Messstrahlung 4.1 und der zweiten Messstrahlung 5.1 dargestellt. Zusätzlich sind die erste Weglänge a, die zweite Weglänge b und ein Abstand c zwischen der ersten Messstrahlquelle 4 und der zweiten Messstrahlquelle 5 gekennzeichnet. Die Bearbeitungsstrahlung 3.1 und die erste Messstrahlung 4.1 können, wie in Fig. 2 dargestellt, strahlüberdeckend verlaufen. Die erste Messstrahlung 4.1 kann jedoch auch nicht entlang der Beleuchtungsachse BA verlaufen. Die erste Messstrahlung 4.1 kann insbesondere strahlparallel oder zumindest teilweise stahlparallel zur Beleuchtungsachse BA verlaufen.

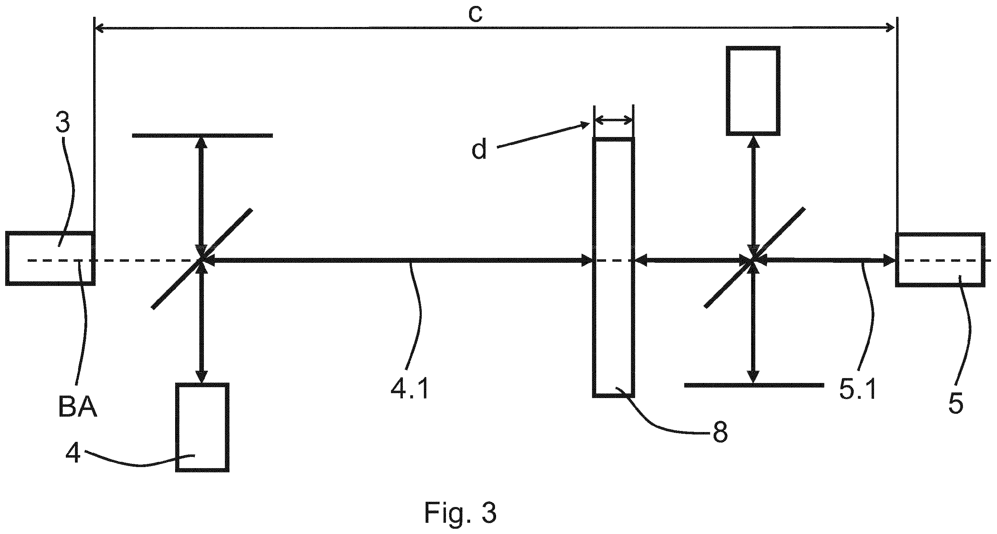

Vor dem Bereitstellen der Airbag-Abdeckung 1 kann der Abstand c zwischen der ersten Messstrahlquelle 4 und der zweiten Messstrahlquelle 5 ermittelt werden, um die verbleibende Restwandstärke RWS aus der Differenz des Abstands c und der Summe der ersten Weglänge a und der zweiten Weglänge b zu ermitteln. In **Fig. 3** ist eine Anordnung zur Ermittlung des Abstands c dargestellt. Dabei wird der Abstand c durch das Einbringen eines reflektierenden Elements 8 ermittelt, das eine definierte Dicke d aufweist. Wenn die Dicke d des reflektierenden Elements 8 entlang der Beleuchtungsachse BA, bekannt ist, kann durch ein Bestimmen der ersten Weglänge a und der zweiten Weglänge b der Abstand c ermittelt werden, der sich aus der Summe der ersten Weglänge a, der zweiten Weglänge b und der Dicke d des reflektierenden Elements 8 ergibt. Auch hierbei können die erste Weglänge a und die zweite Weglänge b mittels optischer Kohärenztomographie ermittelt werden. Der Abstand c der ersten Messstrahlquelle 4 und der zweiten Messstrahlquelle 5 kann auch über eine Ermittlung der Position der Messstrahlquellen oder durch eine aufgebrachte reflektierende Beschichtung auf einer der Messstrahlquellen ermittelt werden. In Fig. 3 ist der Detektor für die zweite Messstrahlquelle 5 dargestellt, der einem Referenzarm gegenüberliegend hinter einem Strahlteiler angeordnet ist.

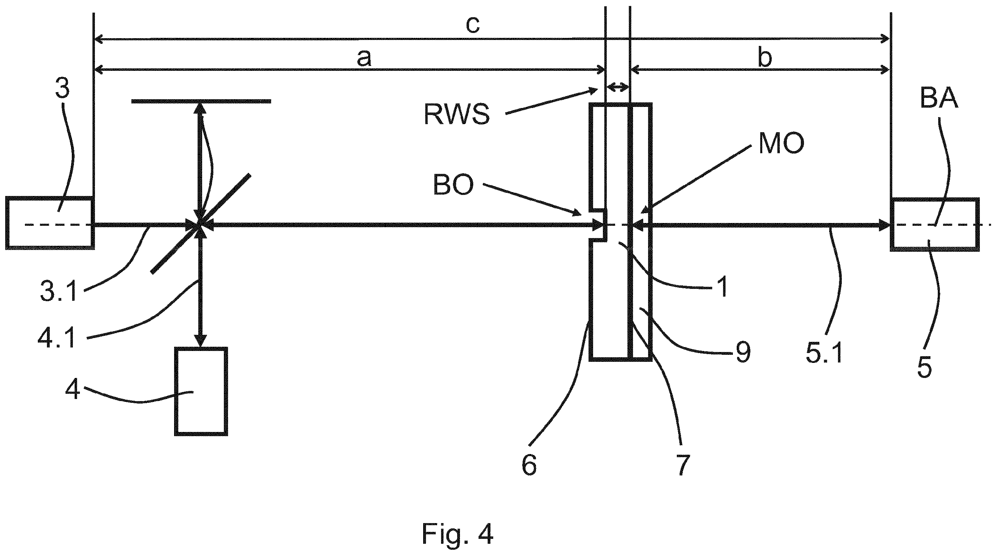

Die erste Weglänge a und/oder die zweite Weglänge b können mittels optischer Kohärenztomographie ermittelt werden. Dazu ist im jeweiligen Messstrahlengang ein Strahlteiler vorhanden, der das von der Messstrahlquelle kommende Licht in einen Referenzarm teilreflektiert oder teiltransmittiert. Im Referenzarm ist ein Spiegel angeordnet, der den in den Referenzarm reflektierten Teil der Messstrahlung zu dem Strahlteiler zurück reflektiert. Am Messort MO und/oder am Bearbeitungsort BO wird ebenfalls ein Teil der beaufschlagten Messstrahlung reflektiert und an dem Strahlteiler wieder mit der der in den Referenzarm reflektierten Teil der Messstrahlung kombiniert. Die beiden Anteile der Messstrahlung interferieren miteinander und aus einer von einem Detektor detektierten Interferenzantwort kann eine Weglängendifferenz zwischen der in den Referenzarm reflektierten Teil der Messstrahlung und dem transmittierten Teil der Messstrahlung ermittelt werden. Aus dieser Weglängendifferenz kann anschließend die erste Weglänge a und/oder die zweite Weglänge b ermittelt werden. In **Fig. 4** ist ein solcher Referenzarm samt Strahlteiler und ebenem Spiegel für die erste Messstrahlquelle 4 dargestellt.

Wenn die Airbag-Abdeckung 1 während des gesamten Verfahrens auf einer Auflagefläche 9 aufliegt, so tut sie das stets mit der von der Bearbeitungsstrahlung 3.1 abgewandten Seite 7. Die erste Messstrahlung 4.1 kann, wie ebenfalls in Fig. 4 dargestellt, auch nur teilweise strahlüberdeckend mit der Bearbeitungsstrahlung 3.1 geführt werden. Damit eine Restwandstärke RWS ermittelt werden kann, muss die von der zweiten Messstrahlquelle 5 emittierte zweite Messstrahlung 5.1 durch die Auflagefläche 9 zum Messort MO gelangen können. Dazu kann die Auflagefläche 9 zumindest teilweise transparent für die zweite Messstrahlung 5.1 sein. Das hat den Vorteil, dass jeder Bearbeitungsort BO und somit jeder Messort MO beliebig gewählt werden kann.

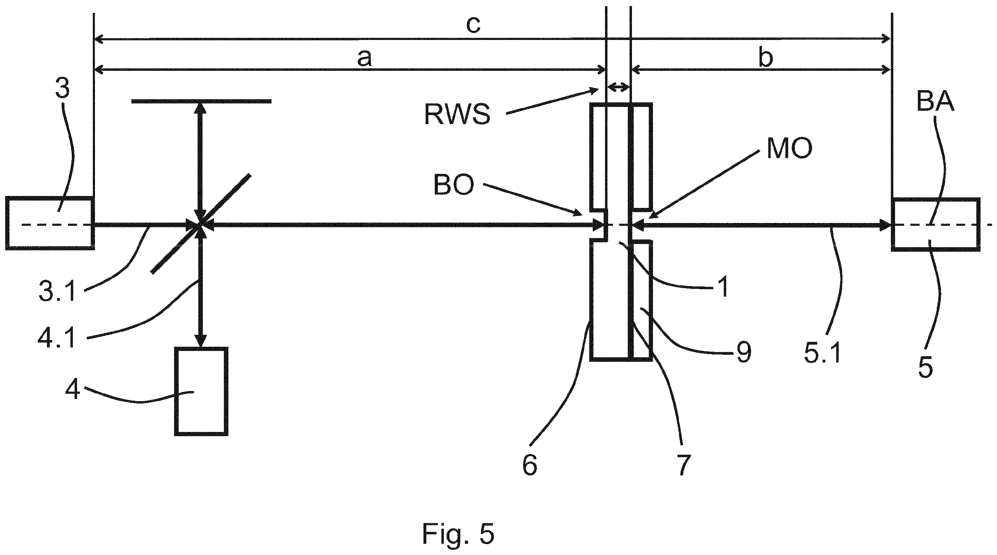

Alternativ kann die Auflagefläche eine Aussparung aufweisen, durch die die zweite Messstrahlung 5.1 zur Airbag-Abdeckung 1 gelangt, wie in **Fig. 5** gezeigt.

### Bezugszeichenliste

- 1: Airbag-Abdeckung
- 2: Werkzeug
- 3: Bearbeitungsstrahlquelle
- 3.1: Bearbeitungsstrahlung
- 4: erste Messstrahlquelle
- 4.1: erste Messstrahlung
- 5: zweite Messstrahlquelle
- 5.1: zweite Messstrahlung
- 6: der Bearbeitungsstrahlquelle zugewandte Seite
- 7: der Bearbeitungsstrahlquelle abgewandte Seite
- 8: reflektierendes Element
- 9: Auflagefläche
- a: erste Weglänge
- b: zweite Weglänge
- c: Abstand
- d: Dicke
- BA: Beleuchtungsachse
- BO: Bearbeitungsort
- MO: Messort
- RWS: Restwandstärke
- L: gedachte Linie

## Patentansprüche

1. Verfahren zum Einbringen einer Perforationslinie in eine Airbag-Abdeckung (1), bei dem die Airbag-Abdeckung (1) relativ zu einem Werkzeug (2) mit einer Bearbeitungsstrahlquelle (3) und einer ersten Messstrahlquelle (4) entlang einer gedachten Linie (L) geführt wird, mit den Schritten:
- Bereitstellen einer Airbag-Abdeckung (1),
- Emittieren einer Bearbeitungsstrahlung (3.1) mit der Bearbeitungsstrahlquelle (3),
- Emittieren einer ersten Messstrahlung (4.1) mit der ersten Messstrahlquelle (4),
- Emittieren einer zweiten Messstrahlung (5.1) mit einer zweiten Messstrahlquelle (5),
- Beaufschlagen eines, sich auf einer der Bearbeitungsstrahlquelle (3) zugewandten Seite (6) der Airbag-Abdeckung (1) befindenden, Bearbeitungsorts (BO) mit der Bearbeitungsstrahlung (3.1) und der ersten Messstrahlung (4.1) entlang einer Beleuchtungsachse (BA), wobei durch das Beaufschlagen mit der Bearbeitungsstrahlung (3.1) ein Materialabtrag am Bearbeitungsort (BO) erfolgt,
- Beaufschlagen eines Messorts (MO) mit einer zweiten Messstrahlung (5.1),
- Ermitteln einer ersten Weglänge (a) der ersten Messstrahlung (4.1),
- Ermitteln einer zweiten Weglänge (b) der zweiten Messstrahlung (5.1),
- Auswerten der ersten und der zweiten Weglänge (a, b), wobei die erste und die zweite Weglänge (a, b) zur Ermittlung eines Parameters verwendet werden und
- Steuern der Bearbeitungsstrahlquelle (3) in Abhängigkeit von dem ermittelten Parameter,
wobei
- der Parameter eine verbleibende Restwandstärke (RWS) ist und
- als Messort (MO) ein Ort auf einer von der Bearbeitungsstrahlquelle (3) abgewandten Seite (7) der Airbag-Abdeckung (1), der sich auf der Beleuchtungsachse (BA) befindet, mit der zweiten Messstrahlung (5.1) beaufschlagt wird und vor dem Bereitstellen der Airbag-Abdeckung (1) ein Abstand (c) zwischen der ersten Messstrahlquelle (4) und der zweiten Messstrahlquelle (5) ermittelt wird und die verbleibende Restwandstärke (RWS) aus der Differenz des Abstands (c) und der Summe der ersten Weglänge (a) und der zweiten Weglänge (b) ermittelt wird,
**dadurch gekennzeichnet,**
**dass** der Abstand (c) der ersten Messstrahlquelle (4) und der zweiten Messstrahlquelle (5) vor dem Bereitstellen der Airbag-Abdeckung (1) durch ein reflektierendes Element (8) mit einer definierten Dicke (d) ermittelt wird, wobei das reflektierende Element (8) am Bearbeitungsort (BO) bereitgestellt wird.

2. Verfahren zum Einbringen einer Perforationslinie in eine Airbag-Abdeckung (1) nach Anspruch 1, **dadurch gekennzeichnet,**
**dass** die erste Messstrahlquelle (4) die Messstrahlquelle eines Kohärenztomographen ist und die erste Weglänge (a) mittels optischer Kohärenztomographie ermittelt wird.

3. Verfahren zum Einbringen einer Perforationslinie in eine Airbag-Abdeckung (1) nach Anspruch 1 oder 2, **dadurch gekennzeichnet,**
**dass** die zweite Messstrahlquelle (5) die Messstrahlquelle eines Kohärenztomographen ist und die zweite Weglänge (b) mittels optischer Kohärenztomographie ermittelt wird.

4. Verfahren zum Einbringen einer Perforationslinie in eine Airbag-Abdeckung (1) nach einem der Ansprüche 1 bis 3, **dadurch gekennzeichnet,**
**dass** die Airbag-Abdeckung (1) während des gesamten Verfahrens auf einer Auflagefläche (9) aufliegt.

5. Verfahren zum Einbringen einer Perforationslinie in eine Airbag-Abdeckung (1) nach Anspruch 4, **dadurch gekennzeichnet,**
**dass** die zweite Messstrahlung (5.1) vor dem Beaufschlagen des Messorts (MO) durch die Auflagefläche (9) transmittiert wird.

6. Verfahren zum Einbringen einer Perforationslinie in eine Airbag-Abdeckung (1) nach Anspruch 4, **dadurch gekennzeichnet,**
**dass** die zweite Messstrahlung (5.1) vor dem Beaufschlagen des Messorts (MO) durch eine Aussparung der Auflagefläche (9) transmittiert wird.

7. Verfahren zum Einbringen einer Perforationslinie in eine Airbag-Abdeckung (1) nach einem der Ansprüche 1 bis 6, **dadurch gekennzeichnet,**
**dass** die erste Messstrahlung (4.1) zumindest abschnittsweise strahlparallel oder strahlüberdeckend mit der Bearbeitungsstrahlung (3.1) geführt wird.

8. Verfahren zum Einbringen einer Perforationslinie in eine Airbag-Abdeckung (1) nach einem der Ansprüche 1 bis 7, **dadurch gekennzeichnet,**
**dass** die Bearbeitungsstrahlung (3.1) eine erste Wellenlänge aufweist, die erste Messstrahlung (4.1) eine zweite Wellenlänge aufweist und die erste Wellenlänge sich von der zweiten Wellenlänge unterscheidet.

9. Verfahren zum Einbringen einer Perforationslinie in eine Airbag-Abdeckung (1) nach einem der Ansprüche 1 bis 8, **dadurch gekennzeichnet,**
**dass** die erste Messstrahlung (4.1) eine Weißlichtstrahlung ist.

10. Verfahren zum Einbringen einer Perforationslinie in eine Airbag-Abdeckung (1) nach einem der Ansprüche 1 bis 9, **dadurch gekennzeichnet,**
**dass** die erste Messstrahlung (4.1) der Laserstrahl eines Faserlasers ist.

11. Verfahren zum Einbringen einer Perforationslinie in eine Airbag-Abdeckung (1) nach einem der Ansprüche 1 bis 9, **dadurch gekennzeichnet,**
**dass** die Bearbeitungsstrahlung (3.1) der Laserstrahl eines CO₂-Lasers ist.

## Claims

1. A method for making a perforation line in an airbag cover (1), wherein the airbag cover (1) is guided relative to a tool (2) with a processing beam source (3) and a first measurement beam source (4) along an imaginary line (L), said method comprising the steps of:
- providing an airbag cover (1),
- emitting a processing beam (3.1) with the processing beam source (3);
- emitting a first measurement beam (4.1) with the first measurement beam source (4);
- emitting a second measurement beam (5.1) with a second measurement beam source (5);
- applying the processing beam (3.1) and the first measurement beam (4.1) along an illumination axis (BA) to a processing location (BO) located on a side (6) of the airbag cover (1) facing the processing beam source (3), wherein the application of the processing beam (3.1) causes material to be removed at the processing location (BO);
- applying a second measurement beam (5.1) to a measurement location (MO);
- determining a first path length (a) of the first measurement beam (4.1);
- determining a second path length (b) of the second measurement beam (5.1);
- evaluating the first and second path lengths (a, b), the first and second path lengths (a, b) being used to determine a parameter, and
- controlling the processing beam source (3) as a function of the determined parameter,
wherein
- the parameter is a remaining residual wall thickness (RWS), and
- as measurement location (MO), a location on a side (7) of the airbag cover (1) facing away from the processing beam source (3) and located on the illumination axis (BA) is acted upon by the second measurement beam (5.1) and, before the airbag cover (1) is provided, a distance (c) between the first measurement beam source (4) and the second measurement beam source (5) is determined and the remaining residual wall thickness (RWS) is determined from the difference between the distance (c) and the sum of the first path length (a) and the second path length (b),
**characterized in that**
the distance (c) of the first measurement beam source (4) and the second measurement beam source (5) is determined, before providing the airbag cover (1), by a reflective element (8) with a defined thickness (d), the reflective element (8) being provided at the processing location (BO).

2. The method for making a perforation line in an airbag cover (1) according to claim 1, **characterized in that**
the first measurement beam source (4) is the measurement beam source of a coherence tomograph and the first path length (a) is determined by means of optical coherence tomography.

3. The method for making a perforation line in an airbag cover (1) according to claim 1 or 2, **characterized in that**
the second measurement beam source (5) is the measurement beam source of a coherence tomograph and the second path length (b) is determined by means of optical coherence tomography.

4. The method for making a perforation line in an airbag cover (1) according to any one of claims 1 to 3, **characterized in that**
the airbag cover (1) rests on a supporting surface (9) during the entire process.

5. The method for making a perforation line in an airbag cover (1) according to claim 4, **characterized in that**
the second measurement beam (5.1) is transmitted through the supporting surface (9) before acting upon the measurement location (MO).

6. The method for making a perforation line in an airbag cover (1) according to claim 4, **characterized in that**
the second measurement beam (5.1) is transmitted through a recess in the supporting surface (9) before acting upon the measurement location (MO).

7. The method for making a perforation line in an airbag cover (1) according to any one of claims 1 to 6, **characterized in that**
the first measurement beam (4.1) is guided, at least in some sections, in a manner parallel to or covering the processing beam (3.1).

8. The method for making a perforation line in an airbag cover (1) according to any one of claims 1 to 7, **characterized in that**
the processing beam (3.1) has a first wavelength, the first measurement beam (4.1) has a second wavelength, and the first wavelength differs from the second wavelength.

9. The method for making a perforation line in an airbag cover (1) according to any one of claims 1 to 8, **characterized in that**
the first measurement beam (4.1) is white light radiation.

10. The method for making a perforation line in an airbag cover (1) according to any one of claims 1 to 9, **characterized in that**
the first measurement beam (4.1) is the laser beam of a fiber laser.

11. The method for making a perforation line in an airbag cover (1) according to any one of claims 1 to 9, **characterized in that**
the processing beam (3.1) is the laser beam of a CO₂ laser.

## Revendications

1. Procédé pour introduire une ligne de perforation dans un capot de coussin de sécurité gonflable (1), dans lequel le capot de coussin de sécurité gonflable (1) est guidé par rapport à un outil (2) comportant une source de rayonnement d'usinage (3) et une première source de rayonnement de mesure (4) le long d'une ligne imaginaire (L), le procédé comprenant les étapes suivantes :
- fourniture d'un capot de coussin de sécurité gonflable (1),
- émission d'un rayonnement d'usinage (3.1) à l'aide de la source de rayonnement d'usinage (3),
- émission d'un premier rayonnement de mesure (4.1) à l'aide de la première source de rayonnement de mesure (4),
- émission d'un deuxième rayonnement de mesure (5.1) à l'aide d'une deuxième source de rayonnement de mesure (5),
- exposition d'un lieu d'usinage (BO), situé sur un côté (6) du capot de coussin de sécurité gonflable (1) tourné vers la source de rayonnement d'usinage (3), au rayonnement d'usinage (3.1) et au premier rayonnement de mesure (4.1) le long d'un axe d'éclairage (BA), l'exposition au rayonnement d'usinage (3.1) entraînant un enlèvement de matière au niveau du lieu d'usinage (BO),
- exposition d'un lieu de mesure (MO) à un deuxième rayonnement de mesure (5.1),
- détermination d'une première longueur de trajet (a) du premier rayonnement de mesure (4.1),
- détermination d'une deuxième longueur de trajet (b) du deuxième rayonnement de mesure (5.1),
- évaluation des première et deuxième longueurs de trajet (a, b), les première et deuxième longueurs de trajet (a, b) étant utilisées pour déterminer un paramètre, et
- commande de la source de rayonnement d'usinage (3) en fonction du paramètre déterminé,
dans lequel
- le paramètre est une épaisseur de paroi résiduelle (RWS) et
- comme lieu de mesure (MO), un emplacement qui est situé sur un côté (7) du capot de coussin de sécurité gonflable (1) opposé à la source de rayonnement d'usinage (3) et qui se trouve sur l'axe d'éclairage (BA), est soumis au deuxième rayonnement de mesure (5.1) et, avant la mise à disposition du capot de coussin de sécurité gonflable (1), une distance (c) entre la première source de rayonnement de mesure (4) et la deuxième source de rayonnement de mesure (5) est déterminée et l'épaisseur de paroi résiduelle (RWS) est déterminée à partir de la différence entre la distance (c) et la somme de la première longueur de trajet (a) et de la deuxième longueur de trajet (b),
**caractérisé en ce que**
la distance (c) entre la première source de rayonnement de mesure (4) et la deuxième source de rayonnement de mesure (5) est déterminée avant la mise à disposition du capot de coussin de sécurité gonflable (1) à l'aide d'un élément réfléchissant (8) d'une épaisseur définie (d), l'élément réfléchissant (8) étant mis à disposition sur le lieu d'usinage (BO).

2. Procédé pour introduire une ligne de perforation dans une capot de coussin de sécurité gonflable (1) selon la revendication 1, **caractérisé en ce que**
la première source de rayonnement de mesure (4) est la source de rayonnement de mesure d'un tomographe à cohérence et la première longueur de trajet (a) est déterminée au moyen d'une tomographie à cohérence optique.

3. Procédé pour introduire une ligne de perforation dans un capot de coussin de sécurité gonflable (1) selon la revendication 1 ou 2, **caractérisé en ce que** la deuxième source de rayonnement de mesure (5) est la source de rayonnement de mesure d'un tomographe à cohérence et la deuxième longueur de trajet (b) est déterminée au moyen d'une tomographie à cohérence optique.

4. Procédé pour introduire une ligne de perforation dans un capot de coussin de sécurité gonflable (1) selon l'une quelconque des revendications 1 à 3,
**caractérisé en ce que**
le capot de coussin de sécurité gonflable (1) repose sur une surface d'appui (9) pendant tout le procédé.

5. Procédé pour introduire une ligne de perforation dans un capot de coussin de sécurité gonflable (1) selon la revendication 4, **caractérisé en ce que**
le deuxième rayonnement de mesure (5.1) est transmis à travers la surface d'appui (9) avant d'atteindre le lieu de mesure (MO).

6. Procédé pour introduire une ligne de perforation dans un capot de coussin de sécurité gonflable (1) selon la revendication 4, **caractérisé en ce que**
le deuxième rayonnement de mesure (5.1) est transmis à travers un évidement de la surface d'appui (9) avant d'atteindre le lieu de mesure (MO).

7. Procédé pour introduire une ligne de perforation dans un capot de coussin de sécurité gonflable (1) selon l'une quelconque des revendications 1 à 6,
**caractérisé en ce que**
le premier rayonnement de mesure (4.1) est guidé au moins par sections de manière parallèle au rayonnement d'usinage (3.1) ou en recouvrant celui-ci.

8. Procédé pour introduire une ligne de perforation dans un capot de coussin de sécurité gonflable (1) selon l'une quelconque des revendications 1 à 7,
**caractérisé en ce que**
le rayonnement d'usinage (3.1) présente une première longueur d'onde, le premier rayonnement de mesure (4.1) présente une deuxième longueur d'onde et la première longueur d'onde diffère de la deuxième longueur d'onde.

9. Procédé pour introduire une ligne de perforation dans un capot de coussin de sécurité gonflable (1) selon l'une quelconque des revendications 1 à 8,
**caractérisé en ce que**
le premier rayonnement de mesure (4.1) est un rayonnement de lumière blanche.

10. Procédé pour introduire une ligne de perforation dans un capot de coussin de sécurité gonflable (1) selon l'une quelconque des revendications 1 à 9,
**caractérisé en ce que**
le premier rayonnement de mesure (4.1) est le faisceau laser d'un laser à fibre optique.

11. Procédé pour introduire une ligne de perforation dans un capot de coussin de sécurité gonflable (1) selon l'une quelconque des revendications 1 à 9,
**caractérisé en ce que**
le rayonnement d'usinage (3.1) est le faisceau laser d'un laser CO₂.
